# EUROPEAN PATENT SPECIFICATION

(11) **EP 2 942 891 B1**
(45) Date of publication and mention of the grant of the patent: **30.10.2019**
(21) Application number: 14290137.0
(22) Date of filing: 07.05.2014
(51) Int. Cl.: H04L 1/00, H04L 1/16, H04L 1/18

(54) **A transmission device with prioritized PHY layer**
Übertragungsvorrichtung mit prioritisierter PHY-Schicht
Dispositif de transmission avec couche PHY classée par ordre de priorité

(43) Date of publication of application: 11.11.2015
(73) Proprietor: Alcatel Lucent, 91620 Nozay (FR)
(72) Inventor: Pauwels, Bart, 2018 Antwerpen (BE)
(74) Representative: IP HILLS NV

(56) References cited:
- EP-A1- 1 758 312
- WO-A2-03/036844
- US-A1- 2004 017 825
- US-A1- 2013 230 324

## Description

### Field of the Invention

The invention relates to the field of packet prioritization at the level of the Physical Layer or PHY layer in wired and wireless communication systems. In such systems, units of binary payload data that are to be transmitted over a communication link such as a wireless or wired medium are assigned with different priorities when entering the medium dependent layers of a transmitting communication device. Such units of data are referred to as Data Transfer Units or DTUs in the remainder of this disclosure. Within the medium dependent layers, these DTUs are further processed and then modulated onto a data signal and transmitted onto the communication medium.

### Background of the Invention

Typically, at different points in a communication link, the maximum available bandwidth decreases towards the end user. This may be caused by a change of the medium over which the data is transmitted whereby data from a high speed input link is put on a low speed output link, i.e., data from a high bandwidth medium is put on a low bandwidth medium. For example, at the point where a communication link changes from an optical fibre as part of a Passive Optical Network or PON to an Ethernet link, there is a decrease in bandwidth. This is also the case where data from a high speed Ethernet link or optical fibre is put on one or more Digital Subscriber Lines or DSL lines or on one or more wireless channel.

When the data packet arrival rate on the high speed input link temporarily exceeds the packet transmission rate on the low speed output link or connection, the packets need to be buffered in a data queue in order to avoid packet loss. Such a queue thus temporarily buffers excess data packets received from the high speed input link until they can be transmitted on the low speed output link.

However, the temporary storage of data in such a queue may introduce an unacceptable extra delay for data carrying delay-sensitive information such as for example voice or streaming video data. Even if the average data packet arrival rate on the high speed input link does not exceed the data packet transmission rate of the low speed output link, the queue may still reach a considerable length in case of a non-constant packet arrival rate.

The well-known approach for addressing this problem is to distinguish arriving packets on the basis of their content, i.e., based on the service they provide, they are assigned a certain priority. Packets are then buffered in different parallel queues according to their priority. Data packets buffered in a particular queue get access to the low speed output link only if no data packets are waiting in other queues with a higher priority, i.e. access to the low speed output link is scheduled according to a strict priority discipline for all queues. The minimum number of parallel queues equals 2 - a high and a low priority queue - but the common number of queues in current state-of-the-art Quality of Service or QoS aware queuing and scheduling systems ranges from 4 to 8.

Typically, such a QoS aware queuing system is present per output interface at the level of the InterWorking Function or IWF, which may serve multiple output interfaces, but does not perform media dependent operations. The media specific operations are performed in a dedicated, media dependent device after the QoS aware queuing system. Media dependent operations are then performed further on in a media dependent device comprising the Medium Access Controller or MAC layer and Physical or PHY layer.

In the best case, a media dependent device only uses a shallow limited queue for each of the output interfaces that it controls, and keeps only few data packets waiting in that queue while preceding data packets for that output interface are being coded for media specific transmission. Backpressure is administered in the IWF for output interfaces as soon as this shallow queue is full, so the bulk of data packets for that output interface is kept waiting in the queues in front of the QoS aware scheduler. This way, each time the back pressure is removed, the most urgent data packets get precedence for access to the data transmission resources.

In existing systems, once the data packets have been scheduled according to delay priority in the IWF, and have been transferred to the media specific device for coding, modulation and transmission, they are not reassessed anymore for delay priority, and their order cannot be changed anymore. This is based on the assumption that any delay further incurred in the media dependent device is relatively small.

However, this assumption is not correct in a number of cases.

A first case is when Forward Error Correction encoding, also referred to as FEC encoding, or any other block coding based error protection mechanism is applied as a form of data error protection. While a long string or block of binary data is being encoded, a high priority data packet has to wait for access to the transmission medium until the previously coded block has left. In other words, while a low priority data packet is being encoded, a high priority packet cannot take precedence although the low priority data packet is not yet transmitted.

A second case, is when Automatic Re-transmission on Request, also referred to as ARQ, is applied as a data protection means on error prone channels. When using ARQ, a data packet is being retransmitted if it was received with errors until it is well-received or until it was retransmitted for a predetermined maximum number or times. In this case, a high priority packet may have to wait for transmission until a previous low priority packet was retransmitted a number of times.

A third case is when rate-less coding, e.g. using Luby Transform or others, of data blocks is applied as data protection means on error prone transmission channels. In this case, the transmitter will continue sending encoded data block fragments in ever changing combinations until the receiver has acknowledged correct reception of the whole data block. Also here, new arrived high priority data packets may have to wait until a previously encoded data block with a low priority data packet has been transferred successfully.

In each of these cases, the delay for transmission incurred in the media dependent device may run in the order of tens of milliseconds which is not negligible for existing delay sensitive services, like interactive voice and video, streaming video or gaming.

Solutions already exist that have extended the QoS aware priority scheduling and queuing beyond the IWF, but each of them still has its flaws. In some way or the other, these solutions all rely on a limited form of differentiation between high and low priority data in the media dependent device.

A first solution uses multiple fixed bandwidth paths, each with different levels of protection and each for data with different priority. This is supported for example in DSL where multiple latency channels may be used. The standards for ADSL, i.e., ITU-T Rec G.992.x, and VDSL, i.e., G.993.x, support up to 4 channels with different latency and different FEC protection. Commercial devices support at most 2 channels when FEC based error correction is applied. Each latency channel gets a pre-configured set of bits in the DSL encoding scheme. The differentiation of the traffic towards the media dependent device happens by a priority indication in the data block overhead or by different PHY channel identifications. The problem with this approach is that this data differentiating and scheduling mechanism is not flexible. If transmission capacity is left unused on the high priority, low latency channel, then it cannot be used for low priority traffic. Also, if there is a temporary high offering of high priority data traffic, then this traffic cannot temporarily use more transmission capacity than allocated to the high priority channel, even if there is no low priority traffic in the low priority channel. If this unbalance is persistent, this can be remedied to some extent by using Dynamic Rate Repartitioning or DRR. However, this is a rather heavy process, which cannot be used for small instantaneous bandwidth fluctuations.

A second solution is the use of data pre-emption on a single transmission path where an ongoing transmission of low priority data is suspended at the arrival of a high priority data block and is resumed after the transmission of the high priority data block has finished. This pre-emption of the low priority data block happens at a data block delineation point depending on the applied protocol. E.g. for ATM based DSL, pre-emption can be implemented implicitly by using an ATM cell based priority scheduler. For PTM based DSL, an explicit pre-emption mechanism is required according to the standard as specified in IEEE802.3 clause 61 and ITU-T Rec G.992.3. In this case, a transmission of long low priority data packets is suspended at the next PTM 64/65 block code delineation boundary after which the PTM 64/65 block coded high priority data packets are transmitted. Transmission of the low priority data packet resumes after completion of the high priority data transmission, with a new PTM 64/65 block. The problem with this approach is that it only offers continued priority treatment for high priority data packets on a limited section of the transmission path in the media specific device. The priority treatment stops at the moment where the media specific error correction encoding and protection starts. Therefore, this solution still suffers from the problems outlined above, i.e., delays incurring at the PHY layer cannot be pre-empted and can thus not be prevented.

WO03036844 discloses a medium access control (MAC) architecture that determines transmission latency and block error rate requirements for a plurality of data flows, each data flow having an associated priority and each data flow comprising a plurality of data blocks. The MAC architecture specifies a scheduling entity that determines when transmissions are serviced, and by which hybrid automatic repeat request (H-ARQ) entity. H-ARQ entities determines whether each prior block had been successfully transmitted and, if not, request retransmission of unsuccessfully transmitted data blocks. The scheduling of the data blocks take into account whether or not the previously transmitted data blocks require retransmission. The MAC architecture allows the scheduling entity the ability to initiate new transmissions at any time and to reinitiate previously unsuccessful transmissions at any time.

It is an object of the present invention to overcome the above problems.

### Summary of the Invention

This object is achieved, in a first aspect, by a transmission device for transmitting data transmission units or DTUs over a communication link comprising:
- At least two DTU processing chains.
- A priority scheduler adapted to retrieve processed DTUs from the DTU processing chains according to a priority assigned to the DTU processing chains.
- A physical medium dependent layer adapted to:
   ∘ Retrieve the processed DTUs from the priority scheduler.
   ∘ Further process the retrieved DTUs and transmit the further processed DTUs over the communication link.
Each DTU processing chain further comprises physical or PHY layer error protection mechanisms for the DTUs.

A Data Transmission Unit or DTU is a unit of payload data to be transmitted over the communication link to a receiver. The PHY layer in the transmission device may transmit multiple DTUs at once or split a single DTU over several transmissions depending on the specific standard or protocol applied. The DTU processing chains process the DTUs in parallel and comprise both logic to perform PHY layer error correction on the DTUs and to perform the actions required for the higher protocol layers.

The priority scheduler then selects one or more DTUs from one of the DTU processing chains. At that moment, the DTUs have already the PHY layer error protection mechanisms applied to them. The scheduler may then decide to give priority to a high priority DTU that has entered the high priority processing chain even if a low priority DTU in the low priority processing chain was available before the high priority DTU arrived.

For example, in the case of a transmission device supporting an xDSL standard such as ADSL, VDSL and VDSL2, each DTU processing chain implements the TPS-TC layer also referred to as the Transport Protocol Specific Transmission Convergence layer. In this case, as PHY layer error protection mechanisms for the DTUs are comprised in the processing chains, a part of the Physical Medium Dependent Transmission Convergence layer will be performed by each of the DTU processing chains. In this case the communication link is a twisted pair communication line.

It is an advantage that the PHY layer error protection mechanisms are in priority based DTU processing chains as the delay for sending a high priority DTU caused by the error protection mechanism of a low priority DTU is avoided. Therefore, high priority DTUs get precedence over low priority DTUs even if the high priority DTU enters the high priority DTU chain while a low priority DTU is already being processing by the PHY error protection mechanism.

It is a further advantage that a priority scheduler selects the DTUs according to their priority. There is thus no unused bandwidth because there is no fixed bandwidth allocation depending on priorities. If there are a lot of high priority DTUs, the complete bandwidth may be used for these high priority DTUs while keeping the lower priority DTUs waiting in their respective DTU processing chain.

According to an embodiment these PHY layer error protection mechanisms comprise a Forward Error Correction or FEC encoder.

Due to the block encoding used in a FEC encoder, such an encoder has an intrinsic delay. By having the FEC encoder within the DTU processing chain, a high priority DTU may bypass a low priority DTU which is being encoded.

According to an alternative or complementary embodiment, these PHY layer error protection mechanisms comprises an automatic retransmission module.

Automatic retransmission is a PHY layer error recovery mechanism used in both wired and wireless transceiver devices. Such an automatic retransmission module then stores already transmitted DTUs until they are acknowledged by the receiver. If the DTU is not received or received with errors, the stored DTU is retransmitted over the communication link.

It is an advantage that each DTU processing chain has an automatic retransmission module as this way a high priority DTU can get priority in transmission over a retransmission of low priority DTU from the low priority DTU processing chain. Hence, a high priority DTU is not delayed due to continuous retransmissions of low priority DTU.

Preferably, the priority scheduler is further adapted to always retrieve a high priority DTU from a high priority chain of said DTU processing chains if such a high priority DTU is present.

In other words, the priority scheduler is a strict priority scheduler which always gives priority to the high priority DTU processing chain.

Alternatively, the priority scheduler might also be a weighted round robin or weighted fair queuing scheduler. The scheduler then still retrieves a low priority DTU from a low priority chain even if a high priority DTU is present in a high priority chain according to weights assigned to said processing chains. This allows avoiding total starvation of re-transmitted low priority traffic due to excessive new high priority traffic.

According to a second aspect the invention relates to a method for transmitting data transmission units or DTUs over a communication link by a transmission device comprising the following steps:
- Retrieving processed DTUs by a priority scheduler from at least two DTU processing chains according to a priority assigned to the DTU processing chains.
- Retrieving the processed DTUs from the priority scheduler by a physical medium dependent layer.
- Further processing the retrieved DTUs by the physical medium dependent layer.
- Transmitting the further processed DTUs over the communication link.
- Applying physical or PHY layer error protection mechanisms on said DTUs in said DTU processing chains.

According to a third aspect the invention relates to a computer program product comprising computer-executable instructions for performing the method according to the second aspect when the program is run on a computer.

According to a fourth aspect the invention relates to a computer readable storage medium comprising the computer program product according to the third aspect.

According to a fifth aspect the invention relates to a data processing system programmed for carrying out the method according to the second aspect.

### Brief Description of the Drawings

Fig. 1 illustrates medium dependent DTU processing layers of a transmission device according to the prior art where FEC encoding is used as error protection mechanism; and
Fig. 2 illustrates medium dependent DTU processing layers of a transmission device according to the prior art where automatic retransmission is used as error protection mechanism; and
Fig. 3 illustrates medium dependent DTU processing layers of a transmission device according to the prior art comprising two separate DTU processing chains each with a fixed bandwidth allocation; and
Fig. 4 illustrates medium dependent DTU processing layers of a transmission device according to an embodiment of the invention; and
Fig. 5 illustrates medium dependent DTU processing layers of a transmission device according to an embodiment of the invention; and
Fig. 6 illustrates a transmission device according to embodiments receiving high and low priority DTUs from an InterWorking Function.

### Detailed Description of Embodiment(s)

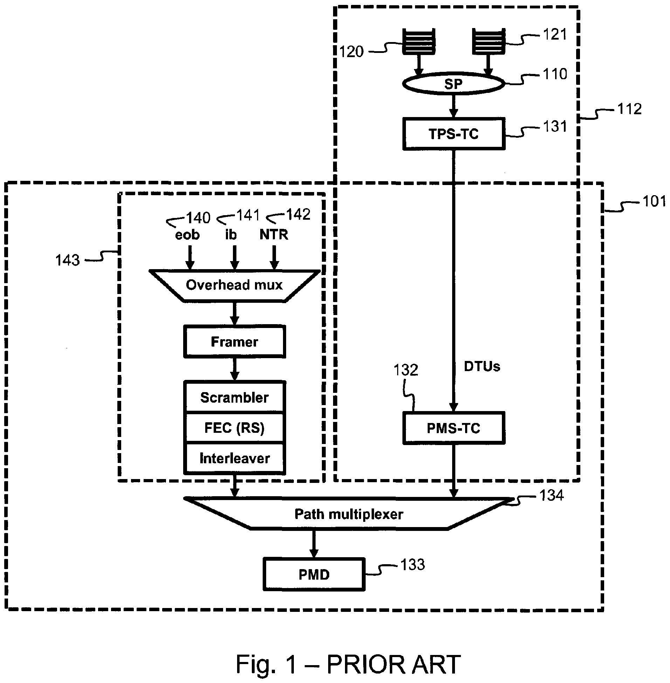

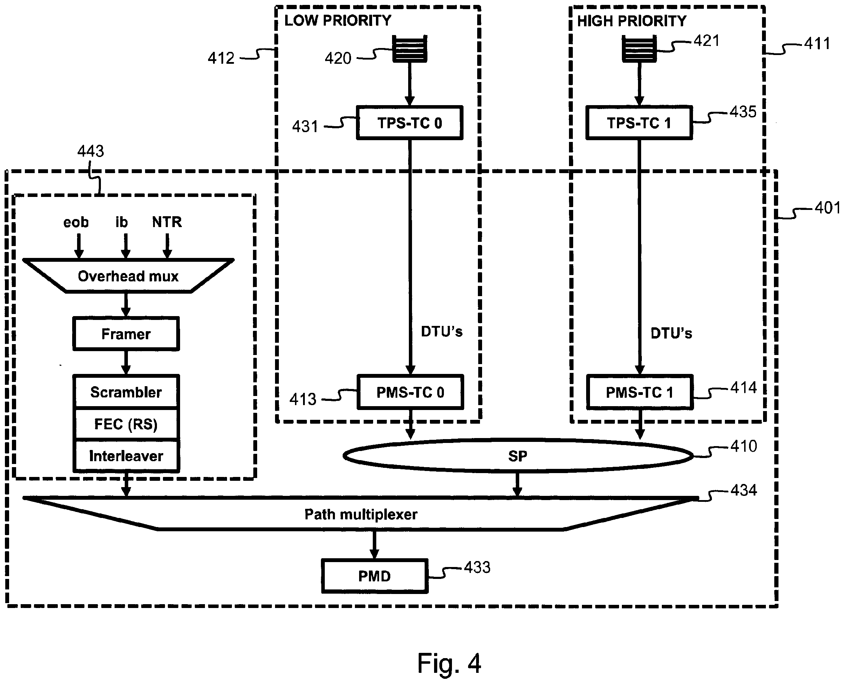

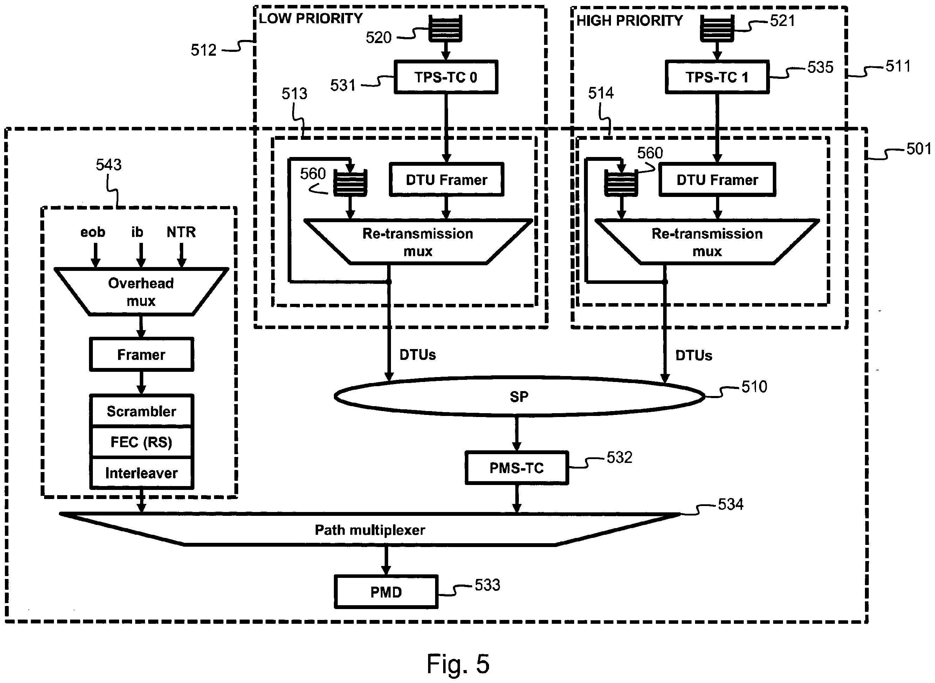

First, Fig. 1, 2 and 3 will be described. They all illustrate medium dependent communication layers of a transmission device as known in the art. Fig. 4 and 5 illustrate medium dependent communication layers of a transmission device according to embodiments of the invention.

Fig. 1 illustrates the processing of DTUs in a transmission device for transmission over a communication link according to the prior art. The communication link is a twisted copper pair and the processing is performed according to the ADSL(2)(plus) or VDSL2 protocol. The device comprises two DTU queues 120 and 121 for buffering incoming DTUs. A first queue 120 is a low priority queue for buffering DTUs with low priority payload data. A second queue 121 is a high priority queue for buffering DTUs with high priority payload data. The queues 120 and 121 may be fed with DTUs by an interworking function (not shown). A priority scheduler 110 then selects DTUs from these queues 120 and 121 for further processing in the DTU processing chain 112. This selecting is done according to a certain priority rule. Typically the scheduler 110 selects DTUs according to a strict priority rule, i.e., it selects DTUs from the highest priority queue 121 as long as DTUs are present in this queue. Only when the queue 121 is empty, the scheduler 110 selects DTUs from the low priority queue 120.

When one or more DTUs are selected they are further processed by the Transport Protocol Specific Transmission Convergence layer 131, shorty the TPS-TC layer 131. Then, in the PHY layer 101, the DTUs are further encoded by the Physical Medium Specific Transmission Convergence layer 132, shortly the PMS-TC 132. In the implementation of Fig. 1 the PMS-TC 132 comprises a Forward Error Correction or FEC block encoder for adding error protecting redundancy bits to the DTUs.

After the encoding in the PMS-TC 132, one or more encoded DTUs are multiplexed together in the multiplexer 134 with other control channels 143 comprising encoded control data as specified by the DSL protocol. In Fig. 1 this control data comprises:
- eob or embedded operations channel 140: this is a low fixed bit rate channel that carries messages for performing negotiations with the peer system in order to achieve a mutually agreeable transmission configuration. It is also used to retrieve higher level status information from the remote device at the other side of the communication link.
- ib or indicator bits 141: again a low fixed bit rate channel which continuously carries some status bits that indicate the power status, transmission anomalies...
- NTR or Network Timing Reference 142: used to transport a network frequency reference clock across the DSL line that applies a free running data clock.

After the multiplexing, the DTU(s) is then transmitted on the communication link by modulation onto a carrier signal by the lower part of the PHY layer, i.e., by the Physical Medium Dependent layer 133, shortly the PMD layer 133.

A disadvantage of the system of Fig. 1 is that the FEC encoder in the PMS-TC 132 imposes a considerable delay. Because of this, it may take in the order of milliseconds between the fetching of a DTU from the queues 120 or 121 and the actual transmission on the communication link by the PMD 133. Because of this a high priority DTU which arrives at a given moment in the queue 121 will have to wait to be fetched by the scheduler until a low priority DTU which is being encoded in the PMS-TC 132 is transmitted. This delay may be unacceptable for a service using the high priority DTUs.

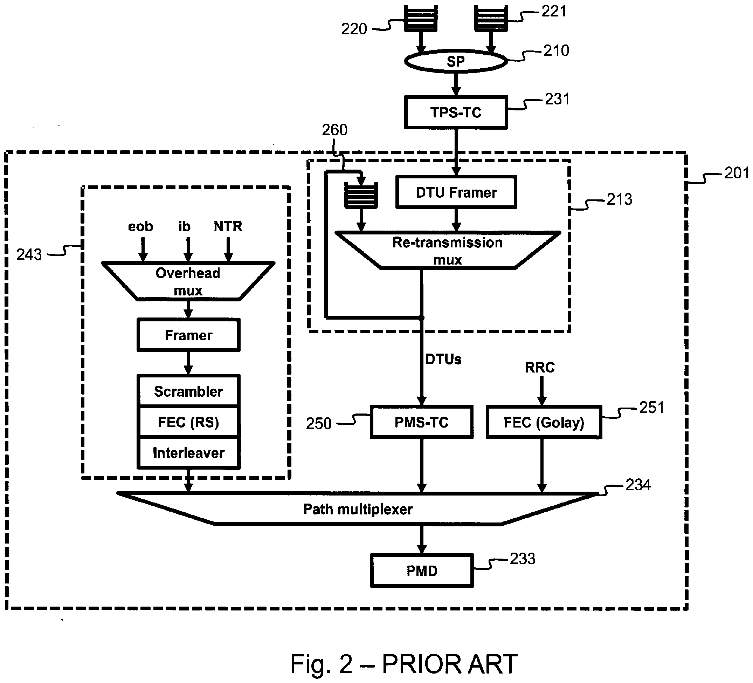

A similar disadvantage is observed by the transmission device as illustrated by Fig. 2 as known in the art. This device comprises the same low and high priority queues 220 and 221, priority scheduler 210, TPS-TC 231, control channels 243, multiplexer 234 and PMD 233. The difference is that in this device another error protection means in the form of an automatic retransmission module 213 within the PHY layer 201 is comprised. In this module 213, transmitted DTUs are also stored in a memory or queue 260. When a DTU is not received or received with errors at the receiver, this DTU is retrieved from the queue 260 and retransmitted by the device. Optionally, the PMS-TC 250 may still apply some further encoding on the DTUs. In this case, another control channel 251 is added to the multiplexer 234. By this Retransmission Return Channel or RRC Chanel 251, the device may then indicate that a previously received packet was received with errors in order to trigger a retransmission by the other device.

This device of Fig. 2 exhibits the same disadvantage as the one of Fig. 1, i.e., the delays imposed by the retransmission module 213 cannot by circumvented by the priority scheduler 210. Therefore, a high priority DTU will be kept waiting in the high priority queue 221 while a low priority DTU is being retransmitted several times from the queue 260. This causes an undesirable delay for services using the payload data in the high priority DTU.

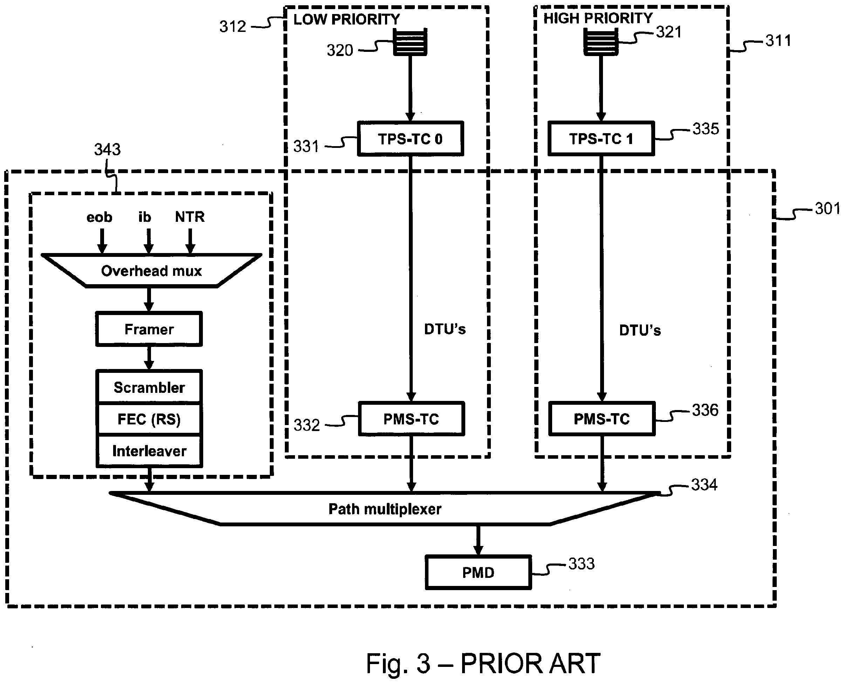

Fig. 3 illustrates an alternative transmission device as known in the art. Again the DTUs are received from a low priority queue 320 and a high priority queue 321. There are two separate DTU processing chains, a low priority DTU processing chain 312 and a high priority DTU processing chain 311. Each of these processing chains comprises a respective instance 331 and 335 of the TPS-TC and a respective instance 332 and 336 the PMS-TC. DTUs from both processing chains 311 and 312 are then multiplexed by the multiplexer 334 together with the control channels 343 in order to obtain a packet for transmission by the PMD 333. This way both low and high priority DTU may be embedded in a single packet transmission. In other words, a fixed part of the bandwidth is allocated to low priority DTUs and another fixed part of the bandwidth is allocated to high priority DTUs. An advantage of a transmission device according to Fig. 3 is that delays imposed by the TPS-TC 331 and PMS-TC 332 in the low priority chain 312 are not reflected in the transmission times for DTUs in the high priority queue 321. More specifically the delays imposed by the error protection mechanisms in the PMS-TC 332 within the PHY layer 301 are bypassed. However, this solution is not flexible as the bandwidth allocation is fixed and thus the multiplexing is performed according to a fixed rule.

Fig. 4 illustrates a transmission device and medium dependent communication layers according to an embodiment. Similar to Fig. 3, it comprises a low priority DTU processing chain 412 and a high priority processing chain 411. Each processing chain comprises a DTU input queue 420 or 421, a TPS-TC layer 431 or 435, and a PMS-TC layer 413 or 414. In the embodiment of Fig. 4 the PMS-TC layers 413 and 414 each comprises the PHY layer 401 error protection mechanisms in the form of a FEC encoder.

Before the multiplexer 434, there is a fixed priority scheduler 410. This scheduler 410 selects DTUs from either the low or high DTU processing chain 411 or 412 where DTUs from the high priority DTU chain 411 get priority over the DTUs from the low priority DTU chain 412. In other words, when a DTU is being encoded in the PMS-TC 413 and a new DTU arrives in the high priority DTU queue 421, the scheduler will not select the encoded low priority encoded DTU, but will select the high priority DTU. This way, the high priority DTU is not affected by the encoding delay of the low priority DTU in the PMS-TC 413.

The DTUs selected by the scheduler are then multiplexed by the multiplexer 434 together with the control channels 443 into a packet for further modulation and transmission by the PHY layer's 401 PMD sublayer 433.

Fig. 5 illustrates a transmission device according to an embodiment for the case where the PHY layer error protection mechanisms are performed by an automatic retransmission module 513 and 514. Similar to Fig. 4 the device comprises a low priority DTU processing chain 512 and a high priority DTU processing chain 511. Each chain comprises a respective queue 520 and 521 for receiving and buffering incoming DTUs from higher communication layers, a respective TPS-TC layer 531 and 535 and a respective automatic retransmission module 513 and 514 as part of the PHY layer 501.

A scheduler 510 fetches the DTUs from the chains 512 and 511 under a strict priority rule, or another rule that offers an advantage to the high priority DTUs. As soon as a high priority DTU is present in the high priority queue 521, the scheduler will not fetch or may reduce the fetched share of DTUs from the low priority chain 512 even if low priority DTUs are already present in the low priority chain 512.

The scheduler also gives priority to high priority DTUs if a low priority DTU is already transmitted but when a retransmission is needed. In this case a low priority DTU resides in the queue or memory 560 of the low priority processing chain 512. This residing DTU is then kept waiting in the memory or queue 560 until the high priority queue 521 is emptied.

After the scheduler 510, the PHY layer's PMS-TC layer 532 may perform further operations on the selected DTUs. These may also comprise further error protection mechanisms. Alternatively, the PMS-TC 532 may also be implemented within each of the DTU processing chains 511 and 512.

Similar to Fig. 4, the multiplexer 534 then multiplexes the processed DTUs together with the other control channels 543. In this case, also two separate retransmission return channels may be provided (not shown in Fig. 4). The multiplexed packet is then further modulated and transmitted by the PHY layer's 501 PMD sublayer 533.

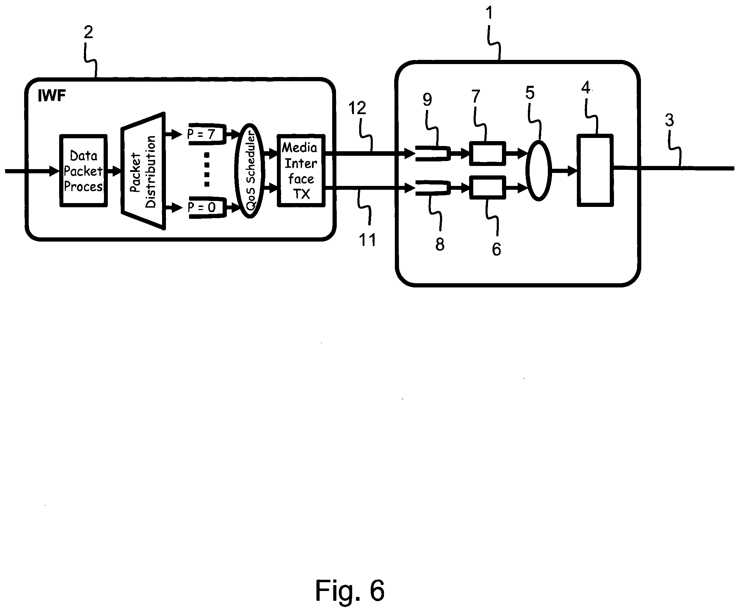

Fig. 6 illustrates a schematic view of a transmission device 1 according to the above embodiments interoperating with device 2 that performs an InterWorking Function or IWF. This IWF function receives data packets, processes them and provides them as high 11 and low 12 priority DTUs to the respective high and low priority input queues 8 and 9 the of transmission device 1. The transmission device further comprises separate PHY layer error protections means 6 and 7 each for respective high and low priority DTUs. A priority scheduler 5 according to the above embodiments is located after these error corrections means 6 and 7. The scheduler is configured to retrieve DTUs from the high priority queue 8 even if low priority DTUs are already being processed by the low priority error protection means 7. After the scheduler 5, further PHY layer processing is performed on the DTUs in the media dependent processing block 4 before the DTUs are transmitted in the form of a data signal onto the communication line 3.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A transmission device (1) for transmitting data transmission units or DTUs over a communication link (3) comprising:
- at least two DTU processing chains (411, 412, 511, 512);
- a priority scheduler (410, 510, 5) adapted to retrieve processed DTUs from said DTU processing chains according to a priority assigned to said DTU processing chains;
- a physical medium dependent layer (401, 501, 4) adapted to:
o retrieve said processed DTUs from said priority scheduler (410, 510); and
o further process said retrieved DTUs and transmit said further processed DTUs over said communication link;
**CHARACTERIZED IN THAT**:
each DTU processing chain (411, 412, 511, 512) comprises physical or PHY layer error protection mechanisms (413, 414, 513, 514, 6, 7) for said DTUs.

2. A transmission device (1) according to claim 1 wherein said PHY layer error protection mechanisms comprise a Forward Error Correction or FEC encoder (413, 414).

3. A transmission device (1) according to claim 1 wherein said PHY layer error protection mechanisms comprise an automatic retransmission module (513, 514).

4. A transmission device (1) according to claim 1 wherein said priority scheduler 410, 510, 5) is further adapted to always retrieve a high priority DTU from a high priority chain of said DTU processing chains if such a high priority DTU is present.

5. A transmission device (1) according to claim 1 wherein said priority scheduler is a weighted fair queuing scheduler and is further adapted to still retrieve a low priority DTU from a low priority chain even if a high priority DTU is present in a high priority chain according to weights assigned to said processing chains.

6. A method for transmitting data transmission units or DTUs over a communication link (3) by a transmission device (1) comprising the following steps:
- retrieving processed DTUs by a priority scheduler (410, 510, 5) from at least two DTU processing chains according to a priority assigned to said DTU processing chains (411, 412, 511, 512);
- retrieving said processed DTUs from said priority scheduler (410, 510) by a physical medium dependent layer (401, 501, 4); and
- further processing said retrieved DTUs by said physical medium dependent layer (401, 501, 4); and
- transmitting said further processed DTUs over said communication link;
**CHARACTERIZED IN THAT** said method further comprises:
- applying physical or PHY layer error protection mechanisms (413, 414, 513, 514, 6, 7) on said DTUs in said DTU processing chains (411, 412, 511, 512).

7. A computer program product comprising computer-executable instructions for performing the method according to claim 6 when the program is run on a computer.

8. A computer readable storage medium comprising the computer program product according to claim 7.

9. A data processing system programmed for carrying out the method according to claim 6.

## Patentansprüche

1. Übertragungsvorrichtung (1) zum Übertragen von Datenübertragungseinheiten oder DTUs über eine Kommunikationsverbindung (3), Folgendes umfassend:
- mindestens zwei DTU-Verarbeitungsketten (411, 412, 511, 512);
- einen Prioritätsplaner (410, 510, 5), der angepasst ist, gemäß einer Priorität, die den DTU-Verarbeitungsketten zugewiesen ist, verarbeitete DTUs aus den DTU-Verarbeitungsketten abzurufen;
- eine physische medienabhängige Schicht (401, 501, 4), die zu Folgendem angepasst ist:
o Abrufen der verarbeiteten DTUs vom Prioritätsplaner (410, 510); und
o weiteres Verarbeiten der abgerufenen DTUs und Übertragen der weiterverarbeiteten DTUs über die Kommunikationsverbindung;
**DADURCH GEKENNZEICHNET, DASS**:
jede DTU-Verarbeitungskette (411, 412, 511, 512) physische oder PHY-Schichtfehlerschutzmechanismen (413, 414, 513, 514, 6, 7) für die DTUs umfasst.

2. Übertragungsvorrichtung (1) nach Anspruch 1, wobei die PHY-Schichtfehlerschutzmechanismen einen Vorwärtsfehlerkorrektur- oder FEC-Codierer (413, 414) umfassen.

3. Übertragungsvorrichtung (1) nach Anspruch 1, wobei die PHY-Schichtfehlerschutzmechanismen ein automatisches Neuübertragungsmodul (513, 514) umfassen.

4. Übertragungsvorrichtung (1) nach Anspruch 1, wobei der Prioritätsplaner (410, 510, 5) ferner angepasst ist, aus einer Kette hoher Priorität der DTU-Verarbeitungsketten immer eine DTU hoher Priorität abzurufen, wenn eine derartige DTU hoher Priorität vorhanden ist.

5. Übertragungsvorrichtung (1) nach Anspruch 1, wobei der Prioritätsplaner ein Planer für gewichtetes faires Einreihen ist und ferner angepasst ist, auch wenn eine DTU hoher Priorität in einer Kette hoher Priorität vorhanden ist, gemäß Gewichtungen, die den Verarbeitungsketten zugewiesen sind, trotzdem eine DTU niedriger Priorität aus einer Kette niedriger Priorität abzurufen.

6. Verfahren zum Übertragen von Datenübertragungseinheiten oder DTUs durch eine Übertragungsvorrichtung (1) über eine Kommunikationsverbindung (3), das die folgenden Schritte umfasst:
- Abrufen von verarbeiteten DTUs durch einen Prioritätsplaner (410, 510, 5) aus mindestens zwei DTU-Verarbeitungsketten gemäß einer Priorität, die den DTU-Verarbeitungsketten (411, 412, 511, 512) zugewiesen ist;
- Abrufen der verarbeiteten DTUs vom Prioritätsplaner (410, 510) durch eine physische medienabhängige Schicht (401, 501, 4) und
- weiteres Verarbeiten der abgerufenen DTUs durch die physische medienabhängige Schicht (401, 501, 4) und
- Übertragen der weiterverarbeiteten DTUs über die Kommunikationsverbindung;
**DADURCH GEKENNZEICHNET, DASS** das Verfahren ferner Folgendes umfasst:
- Anwenden von physischen oder PHY-Schichtfehlerschutzmechanismen (413, 414, 513, 514, 6, 7) auf die DTUs in den DTU-Verarbeitungsketten (411, 412, 511, 512).

7. Computerprogrammprodukt, das computerausführbare Anweisungen zum Durchführen des Verfahrens nach Anspruch 6, wenn das Programm auf einem Computer ausgeführt wird, umfasst.

8. Computerlesbares Speichermedium, das das Computerprogrammprodukt nach Anspruch 7 umfasst.

9. Datenverarbeitungssystem, das zum Umsetzen des Verfahrens nach Anspruch 6 programmiert ist.

## Revendications

1. Dispositif (1) de transmission destiné à transmettre des unités de transmission de données ou DTU sur une liaison (3) de communication, comportant :
- au moins deux chaînes (411, 412, 511, 512) de traitement de DTU ;
- un programmateur (410, 510, 5) à priorité prévu pour extraire des DTU traitées desdites chaînes de traitement de DTU selon une priorité affectée auxdites chaînes de traitement de DTU ;
- une couche (401, 501, 4) dépendant du support physique prévue pour :
∘ extraire lesdites DTU traitées dudit programmateur (410, 510) à priorité ; et
∘ traiter encore lesdites DTU extraites et transmettre lesdites DTU encore traitées sur ladite liaison de communication ;
**caractérisé en ce que** :
chaque chaîne (411, 412, 511, 512) de traitement de DTU comporte des mécanismes (413, 414, 513, 514, 6, 7) de protection contre les erreurs de couche physique ou PHY pour lesdites DTU.

2. Dispositif (1) de transmission selon la revendication 1, lesdits mécanismes de protection contre les erreurs de couche PHY comportant un codeur (413, 414) à correction d'erreur directe ou FEC.

3. Dispositif (1) de transmission selon la revendication 1, lesdits mécanismes de protection contre les erreurs de couche PHY comportant un module (513, 514) de retransmission automatique.

4. Dispositif (1) de transmission selon la revendication 1, ledit programmateur (410, 510, 5) à priorité étant en outre prévu pour toujours extraire une DTU à haute priorité d'une chaîne à haute priorité parmi lesdites chaînes de traitement de DTU si une telle DTU à haute priorité est présente.

5. Dispositif (1) de transmission selon la revendication 1, ledit programmateur à priorité étant un programmateur à mise en file d'attente équitable pondérée et étant en outre prévu pour extraire néanmoins une DTU à basse priorité d'une chaîne à basse priorité même si une DTU à haute priorité est présente dans une chaîne à haute priorité, selon des poids affectés auxdites chaînes de traitement.

6. Procédé de transmission d'unités de transmission de données ou DTU sur une liaison (3) de communication par un dispositif (1) de transmission, comportant les étapes suivantes :
- extraire des DTU traitées par un programmateur (410, 510, 5) à priorité d'au moins deux chaînes de traitement de DTU selon une priorité affectée auxdites chaînes (411, 412, 511, 512) de traitement de DTU ;
- faire extraire lesdites DTU traitées dudit programmateur (410, 510) à priorité par un couche (401, 501, 4) dépendant du support physique ; et
- faire traiter encore lesdites DTU extraites par ladite couche (401, 501, 4) dépendant du support physique ; et
- transmettre lesdites DTU encore traitées sur ladite liaison de communication ;
**caractérisé en ce que** ledit procédé comporte en outre l'étape consistant à :
- appliquer des mécanismes (413, 414, 513, 514, 6, 7) de protection contre les erreurs de couche physique ou PHY sur lesdites DTU dans lesdites chaînes (411, 412, 511, 512) de traitement de DTU.

7. Produit de programme d'ordinateur comportant des instructions exécutables par ordinateur destinées à réaliser le procédé selon la revendication 6 lorsque le programme est exécuté sur un ordinateur.

8. Support de stockage lisible par ordinateur comportant le produit de programme d'ordinateur selon la revendication 7.

9. Système de traitement de données programmé pour réaliser le procédé selon la revendication 6.
